# EUROPÄISCHE PATENTSCHRIFT

(11) **EP 2 708 793 B1**
(45) Veröffentlichungstag und Bekanntmachung des Hinweises auf die Patenterteilung: **03.02.2016**
(21) Anmeldenummer: 12006490.2
(22) Anmeldetag: 15.09.2012
(51) Int. Cl.: F16P 3/14, B60K 28/06

(54) **Sicherheitseinrichtung für eine technische Anlage oder einen technischen Prozess**
Safety device for a technical facility or a technical process
Dispositif de sécurité pour une installation technique ou un procédé technique

(43) Veröffentlichungstag der Anmeldung: 19.03.2014
(73) Patentinhaber: ABB Technology AG, 8050 Zürich (CH)
(72) Erfinder: Hollender, Martin, 69221 Dossenheim (DE); Atkinson, Antony B., Loftus Saltburn T513 4HA (GB)
(74) Vertreter: Marks, Frank

(56) Entgegenhaltungen:
- WO-A1-03/049967
- US-A- 5 942 979
- US-A- 6 060 989

## Beschreibung

Die Erfindung betrifft eine Sicherheitseinrichtung zur Erfassung und Auswertung des Aufmerksamkeitsgrades eines Bedieners einer technischen Anlage oder eines technischen Prozesses, die vorzugsweise in einem Bedien- und Beobachtungssystem der technische Anlage oder des technischen Prozesses integrierbar ist, wobei das Bedienund Beobachtungssystem insbesondere in einer Leitwarte oder Leitanlage einer großtechnischen Anlage, beispielsweise einer Öl- und Gasplattform, einer Raffinerie oder einer Kraftwerksanlage eingesetzt ist. Weiterhin betrifft die Erfindung ein Verfahren zur Erfassung und Auswertung des Aufmerksamkeitsgrades des Bedieners einer technischen Anlage oder eines technischen Prozesses.

Das Bedienen von Bedien- und Überwachungssystemen gestaltet sich in sicherheitskritischen großtechnischen Anlagen stetig komplexer, so dass die Bediener der Anlagen zunehmend anspruchsvollere Aufgaben ausführen, die ihre volle Aufmerksamkeit in Anspruch nehmen.

In der WO 2011/117061 ist ein Verfahren zur Überwachung des Aufmerksamkeitszustandes eines Bedieners einer Produktionseinrichtung beschrieben, mit dem Qualitätseinbußen bei der Fertigung, aber auch Schäden an Produktionseinrichtungen und sogar Gefahren für Gesundheit und Leben der Mitarbeiter im Falle von nachlassender Konzentration durch Übermüdung oder Überlastung des Mitarbeiters reduziert werden. Dabei werden für wiederholte Bedienvorgänge aus Signalen von Sensoren und Bedienelementen der Produktionsanlage in einer vorgesehenen Auswerteeinheit regelmäßig Bedien- oder Reaktionszeiten des Bedieners der Anlage ermittelt, statistisch auswertet und bei Normabweichungen Reaktionen einleitet.

Möglichkeiten zur Erkennung und Überwachung des Aufmerksamkeitsgrades, wie beispielsweise bei Kraftfahrzeugen, sind u.a. aus der DE 102005015486 A1 und der DE 201 19 203 U1 bekannt.

Darüber hinaus ist aus der WO 03/049967 A1 ein Verfahren und eine Vorrichtung zur Erkennung des Schläfrigkeitszustandes von Führern bewegter Objekte bekannt, bei dem eine Mehrzahl von Messgrößen ermittelt, mit Referenzgrößen verglichen und normiert werden. Alle normierten Messgrößen werden zu einem Summensignal verarbeitet, welches mit einem Referenzsummensignal verglichen wird. Soweit das Summensignal das Referenzsummensignal übersteigt, wird Weckfunktion ausgelöst.

In Bedien- und Beobachtungssystemen großtechnischer Anlagen, welche kontinuierlich gefahren werden, können, insbesondere während einer Nachtschicht, Ermüdungserscheinungen der Bediener nicht ausgeschlossen werden, die jedoch schnell zu gravierenden sicherheitskritische Ereignissen innerhalb der Anlage führen können.

Der Erfindung liegt demgemäß die Aufgabe zugrunde, eine Sicherheitseinrichtung und ein Verfahren zur Erfassung und Auswertung des Aufmerksamkeitsgrades des Bedieners einer technischen Anlage oder eines technischen Prozesses anzugeben, wodurch vorgenannte Nachteile des Standes der Technik überwunden werden und die Bedienung und Überwachung, insbesondere einer großtechnischen Anlage oder eines großtechnischen Prozesses, sicherer gestaltet wird.

Diese Aufgabe wird erfindungsgemäß durch eine Sicherheitseinrichtung mit den in Anspruch 1 angegebenen Merkmalen gelöst. Vorteilhafte Ausgestaltungen, Verbesserungen der erfindungsgemäßen Sicherheitseinrichtung und ein entsprechendes Verfahren zur Erfassung und Auswertung des Aufmerksamkeitsgrades des Bedieners einer technischen Anlage oder eines technischen Prozesses sind in weiteren Ansprüchen und in der Beschreibung angegeben.

Die erfindungsgemäße Sicherheitseinrichtung zur Erfassung und Auswertung des Aufmerksamkeitsgrades eines Bedieners einer technischen Anlage oder eines technischen Prozesses umfasst ein erstes Modul, welches Werte von vorgegebenen physiologischen Parametern des Bedieners, betreffend den Aufmerksamkeitsgrad des Bedieners, erfasst. Das erste Modul ist demgemäß dafür vorgesehen, Körperreaktionen des Bedieners, beispielsweise mittels wenigstens eines Sensors, zu erfassen.

Das erste Modul ermittelt aus den erfassten Werten eine erste Kennzahl, vergleicht die ermittelte erste Kennzahl mit einem vorab definierten Kennwert und aktiviert bei einer Überschreitung und/oder Unterschreitung des Kennwertes oder bei Verlassen eines vorab definierten Kennwertbereiches ein zweites Modul.

Das zweite Modul erfasst weitere Werte, die ein Überprüfungs- oder Auslösemechanismus bereitstellt. Der im zweiten Modul integrierten Überprüfungs- oder Auslösemechanismus kann dabei auch Werte betreffend der vom ersten Modul erfassten Körperreaktionen des Bedieners verwenden.

Das zweite Modul ermittelt aus den erfassten weiteren Werten eine zweite Kennzahl für den Aufmerksamkeitsgrad des Bedieners, vergleicht die ermittelte zweite Kennzahl mit wenigstens einem zweiten vorab definierten Kennwert und löst bei einer Überschreitung und/oder Unterschreitung des zweiten Kennwertes oder bei Verlassen eines vorab definierten zweiten Kennwertbereiches ein Aktivierungsmodul, um Gegenmaßnahmen zu ergreifen, welche die Aufmerksamkeit des Bedieners der Anlage erhöhen.

Beispielsweise ermittelt das zweite Modul die KPI's aus der mit dem ersten Modul registrierten Anzahl der Phasen, in der keinerlei registrierter Bewegung des Anlagenfahrers innerhalb von mindestens 5 Minuten erfolgte und aus der mit dem zweiten Modul registrierten Nichtreaktion auf eine Eingabeaufforderung.

In diesem Fall kann eine mit dem ersten Modul bestimmte erste KPI fehlerbehaftet sein, da der Anlagenfahrer vielleicht einfach sehr still gesessen hat. Jedoch ist eine Kombination eines KPI's aus Werten, die mit dem ersten und dem zweiten Modul ermittelt wurden, aussagekräftiger, da hier der Anlagenfahrer seiner Pflicht zur Reaktion auf eine Meldung nicht nachgekommen ist (weil er wahrscheinlich eingeschlafen war). Dann kann beispielsweise vom Aktivierungsmodul als Handlung ein automatischer Rückruf oder eine E-Mail an einen Vorgesetzten erfolgen, wenn der KPI einen Schwellwert über-/unterschreitet.

Mit den vorgegebenen physiologischen Parametern ist der Aufmerksamkeitsgrad bzw. der Ermüdungsgrad des Bedieners bestimmbar. Zu den erfassten physiologischen Parametern des Bedieners zählen beispielsweise die Lidschlagfrequenz, der Puls, der Blutdruck, die Sauerstoffsättigung oder auch die Bewegung des Bedieners innerhalb eines definierten Zeitraumes. Auch die Körperhaltung des Bedieners, die mittels einer im ersten Modul integrierten Bewegungserkennungssoftware, die mit einer Kamera und wenigstens einem Bewegungssensor zusammenarbeitet, bestimmbar ist, kann als physiologischer Parameter erfasst und analysiert werden.

In einer Ausgestaltung der erfindungsgemäßen Sicherheitseinrichtung wirken das erste und das zweite Modul mit einer Verarbeitungs- und Auswerteeinheit zusammen, die aus den erfassten Werten automatisiert eine Kennzahl für den Aufmerksamkeitsgrad des Bedieners ermittelt, diese Kennzahl mit wenigstens einem vorab definierten weiteren Kennwert vergleicht und bei einer Überschreitung und/oder Unterschreitung des weiteren Kennwertes oder bei Verlassen eines vorab definierten weiteren Kennwertbereiches ein weiteres Aktivierungsmodul auslöst.

In einer bevorzugten Ausführungsform der erfindungsgemäßen Sicherheitseinrichtung ist als Auslösemechanismus ein Signalgeber vorgesehen, welcher bei der Überschreitung und/oder Unterschreitung des Kennwertes oder bei Verlassen des vorab definierten Kennwertbereiches das Aktivierungsmodul auslöst.

In einer weiteren Ausführungsform übermittelt der Überprüfungsmechanismus automatisiert ein vorab eingestelltes Signal an den Bediener. Der Verarbeitungs- und Auswerteeinheit wird erst nach einer Rückmeldung des Bedieners auf das übermittelte Signal ein Wert zur weiteren Verarbeitung zur Verfügung gestellt, der dann nach seiner Verarbeitung das Aktivierungsmodul auslöst.

In einer weiteren vorteilhaften Ausgestaltung der erfindungsgemäßen Sicherungseinrichtung ist vorgesehen, auch im zweiten Modul eine Bewegungserkennungssoftware zu integrieren, die ein Signal oder ein Impuls generiert, wenn über einen vorab festgelegten Zeitraum vom ersten oder zweiten Modul kein Wert für eine vorab definierte Bewegung registriert wird. Durch diesen Impuls kann beispielsweise der Luftstrom einer Klimaanlage erhöht, die Temperatur des Luftstromes abgesenkt werden und/oder der Bediener aufgefordert werden, eine bestimmte Eingabe zu tätigen.

Die erfindungsgemäße Sicherheitseinrichtung ist in vorteilhafter Weise in ein Bedien- und Beobachtungssystem einer sicherheitskritischen technischen Anlage oder eines sicherheitskritischen technischen Prozesses, insbesondere einer Öl- und Gasplattform, einer Raffinerie oder einer Kraftwerksanlage integrierbar.

Durch die Integration der erfindungsgemäßen Sicherheitseinrichtung zur Überwachung des Aufmerksamkeitsgrades von Mitarbeitern im Bedien- und Beobachtungssystem der sicherheitskritischen Anlage oder des sicherheitskritischen Prozesses lassen sich Ermüdungszustände frühzeitig erkennen und daraus entstehende Gefahren vermeiden.

Das Verfahren, mit dem die Aufgabe weiterhin gelöst wird, beruht darauf, dass der Ermüdungsprozess und damit der Aufmerksamkeitsgrad des Bedieners einer technischen Anlage oder eines technischen zweistufig erfasst wird, wobei in einem ersten Verfahrensabschnitt zunächst nur Werte erfasst werden, die ein kostengünstiger einfacher Test, der vom Bediener der Anlage nur wenig oder gar nicht wahrgenommen wird, bereitstellt. Dieser Test hat typischerweise eine hohe Rate an falsch positiven (Ermüdung wurde gemeldet, obwohl sie nicht vorliegt) und eine geringe Rate an falsch negativen Ergebnissen (Ermüdung wurde nicht gemeldet, obwohl sie vorliegt). Erst wenn der erste Verfahrensabschnitt mit einem vorab definierten Ergebnis beendet ist, wird ein zweiter Verfahrensabschnitt mit einem präziseren und aber auch aufwendigeren beziehungsweise mehr störenden Test bezüglich der Ermüdungserscheinungen des Bedieners ausgelöst, der eine Auslösung von Aktionen startet.

Mit dem erfindungsgemäßen Verfahren werden mittels einer Sicherheitseinrichtung der Aufmerksamkeitsgrad eines Bedieners einer technischen Anlage oder eines technischen Prozesses erfasst und ausgewertet, wobei ein ersten Modul vorgesehen ist, mit dem Werte von vorgegebenen physiologischen Parametern des Bedieners bereitgestellt werden.

Mit dem erstem Modul wird aus den erfassten Werten eine erste Kennzahl ermittelt, die ermittelte erste Kennzahl wird mit einem vorab definierten Kennwert verglichen und bei einer Überschreitung und/oder Unterschreitung des Kennwertes oder bei Verlassen eines vorab definierten Kennwertbereiches wird ein mit dem ersten Modul zusammenwirkendes zweites Modul aktiviert, mit dem weitere Werte, die ein Überprüfungs- oder Auslösemechanismus bereitstellt, erfasst werden.

Aus den erfassten weiteren Werten wird im zweiten Modul eine zweite Kennzahl für den Aufmerksamkeitsgrad des Bedieners ermittelt, diese wird mit wenigstens einem zweiten vorab definierten Kennwert verglichen und bei einer Überschreitung und/oder Unterschreitung des zweiten Kennwertes oder bei Verlassen eines vorab definierten zweiten Kennwertbereiches wird ein Aktivierungsmodul zum Ergreifen von Gegenmaßnahmen, welche die Aufmerksamkeit des Bedieners der Anlage zu erhöhen, auslöst.

In einer Ausgestaltung des erfindungsgemäßen Verfahrens wird mittels einer mit dem ersten und dem zweiten Modul zusammenwirkenden Verarbeitungs- und Auswerteeinheit aus den erfassten Werten automatisiert eine Kennzahl für den Aufmerksamkeitsgrad des Bedieners ermittelt, diese wird mit wenigstens einem vorab definierten Kennwert verglichen und bei einer Überschreitung und/oder Unterschreitung des Kennwertes oder bei Verlassen eines vorab definierten Kennwertbereiches wird ein Aktivierungsmodul ausgelöst.

In einer weiteren Ausgestaltung des erfindungsgemäßen Verfahrens ist vorgesehen, dass unter Verwendung einer im ersten und/oder zweiten Modul abgelegten Bewegungserkennungssoftware ein Signal generiert wird, wenn über einen vorab festgelegten Zeitraum keine Bewegung des Bedieners registriert wurde und dieses Signal ebenfalls der Verarbeitungs- und Auswerteeinheit zur Verfügung gestellt, um die Kennzahl für den Aufmerksamkeitsgrad des Bedieners zu ermitteln.

In einer weiteren Ausgestaltung des erfindungsgemäßen Verfahrens werden die vom ersten und zweiten Modul bereitgestellten Werte von der Verarbeitungs- und Auswerteeinheit aufgezeichnet bzw. gespeichert und daraus wird eine Langzeitkennzahl bestimmt, mit der beispielsweise eine Aussage über die durchschnittliche Anzahl von Ermüdungserscheinungen über einen vorab definierten Zeitraum (z.B. 24 Stunden) getroffen wird.

Die so bereitgestellten Aussagen können in vorteilhafter Weise dazu genutzt werden vorhandene Bedien- und Überwachungseinrichtungen bezüglich der Arbeitsplatzgestaltung des Bedieners zu verbessern, indem die in einfacher und kostengünstiger Weise mit dem erstes Modul erzeugten Werte von vorgegebenen physiologischen Parametern mit den vom zweiten Modul über einen präziseren Überprüfungs- oder Auslösemechanismus bereitstellten Werte, miteinander kombiniert und daraus eine Kennzahl für den Aufmerksamkeitsgrad des Bedieners ermittelt wird.

Anhand des in der folgenden Figur dargestellten Ausführungsbeispiele sollen die Erfindung sowie vorteilhafte Ausgestaltungen, Verbesserungen und weitere Vorteile der Erfindung näher erläutert und beschrieben werden.

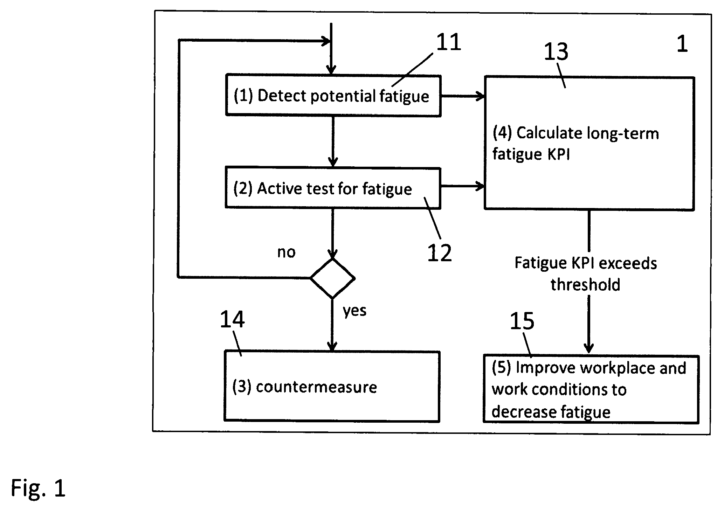

Die Figur 1 zeigt eine beispielhafte Sicherheitseinrichtung 1 zur Erfassung und Auswertung des Aufmerksamkeitsgrades eines Bedieners einer technischen Anlage mit einem sogenannten passiven Modul 11, welches Körperreaktionen eines Bedieners der Anlage erfasst und daraus Werte betreffend den Aufmerksamkeitsgrad des Bedieners generiert und zu einer Verarbeitungs- und Auswerteeinheit 13 übermittelt.

Die erfindungsgemäße Sicherheitseinrichtung umfasst weiterhin ein zweites sogenanntes aktives Modul 12, das weitere Werte, die ein Überprüfungs- oder Auslösemechanismus bereitstellt, erfasst und zur Verarbeitungs- und Auswerteeinheit 13 übermittelt.

Die mit dem ersten und zweiten Modul 11, 12 zusammenwirkende Verarbeitungs- und Auswerteeinheit 13 ermittelt aus den erfassten Werten automatisiert eine Kennzahl KPI für den Aufmerksamkeitsgrad des Bedieners, vergleicht die ermittelte Kennzahl KPI mit wenigstens einem vorab definierten Kennwert und löst bei einer Überschreitung und/oder Unterschreitung des Kennwertes oder bei Verlassen eines vorab definierten Kennwertbereiches ein Aktivierungsmodul 15 aus.

Ein Beispiel für einen mit dem ersten Modul 11 durchgeführten Test kann darauf beruhen, dass überwacht wird, ob sich eine Person über einen langen Zeitraum nicht bewegt, dies kann bedeuten, dass sie eingeschlafen ist, aber auch dass sie sehr konzentriert nachdenkt.

Ein Beispiel für einen mit dem zweiten Modul 12 durchgeführten Test kann darauf beruhen, dass der Person eine Meldung bzw. Alarm, beispielsweise "Drücken Sie bitte auf die Taste "ESC" übermittelt wird. Diese Meldung wird jedoch nur bereitgestellt, wenn der zuvor mit dem ersten Modul 11 ermittelte Wert auf einen begründeten Verdacht hindeutet, dass der Anlagenfahrer eingeschlafen ist. Dann ist eine Nichtreaktion des Anlagenfahrers ein deutlicher Hinweis auf Schlaf.

In einer Ausgestaltung des erfindungsgemäßen Verfahrens ist vorgesehen, dass mittels einer im ersten und/oder zweiten Modul 11, 12 abgelegten Bewegungserkennungssoftware ein Signal generiert wird, wenn über einen vorab festgelegten Zeitraum keine Bewegung des Bedieners registriert wurde und dieses Signal ebenfalls der Verarbeitungsund Auswerteeinheit 13 zur Verfügung gestellt wird, um die Kennzahl für den Aufmerksamkeitsgrad des Bedieners zu ermitteln.

In einer weiteren Ausgestaltung des erfindungsgemäßen Verfahrens werden die vom ersten und zweiten Modul 11, 12 bereitgestellten Werte von der Verarbeitungs- und Auswerteeinheit 13 aufgezeichnet bzw. gespeichert und daraus wird eine Langzeitkennzahl bestimmt, mit der ein Ermüdungsmanagement realisiert wird und beispielsweise Aussage über die durchschnittliche Anzahl von Ermüdungserscheinungen über einen vorab definierten Zeitraum (z.B. 24 Stunden) getroffen wird.

Die so bereitgestellten Aussagen können in vorteilhafter Weise dazu genutzt werden Gegenmaßnahmen 14 zu ergreifen, um die Aufmerksamkeit des Bedieners der Anlage zu erhöhen. Dazu zählen beispielsweise die Ausgabe eines Signaltones, eine automatische Information einer weiteren Person oder den Luftstrom einer Klimaanlage bzw. deren Temperatur abzusenken.

Mit der vorliegenden Erfindung wird in vorteilhafter Weise ein billiger einfacher Test, der vom Bediener der Anlage nur wenig oder gar nicht wahrgenommen wird, und vom ersten Modul 11 bereitgestellt wird, mit einem weiteren weitaus präziseren Test bezüglich der Ermüdungserscheinungen des Bedieners kombiniert, der vom zweiten Modul 12 bereitgestellt wird.

In einer vorteilhaften Ausgestaltung wird der vom ersten Modul 11 ausgeführte Test mit zum Verdacht schöpfen verwendet, so dass sich die Anwendung des Testes mit dem zweiten Modul 12 lohnt bzw. angemessen ist.

## Patentansprüche

1. Sicherheitseinrichtung zur Erfassung und Auswertung des Aufmerksamkeitsgrades eines Bedieners einer technischen Anlage oder eines technischen Prozesses mit einem ersten Modul (11), welches Werte von vorgegebenen physiologischen Parametern des Bedieners erfasst und aus den erfassten Werten eine erste Kennzahl (KPI1) ermittelt, die ermittelte erste Kennzahl (KPI1) mit einem vorab definierten ersten Kennwert vergleicht und bei einer Überschreitung und/oder Unterschreitung des ersten Kennwertes oder bei Verlassen eines vorab definierten ersten Kennwertbereiches ein zweites Modul (12) aktiviert, das weitere Werte, die ein Überprüfungs- oder Auslösemechanismus bereitstellt, erfasst, wobei das zweite Modul (12) aus den erfassten weiteren Werten von vorgegebenen physiologischen Parametern des Bedieners eine zweite Kennzahl (KPI2) für den Aufmerksamkeitsgrad des Bedieners ermittelt, die zweite Kennzahl (KPI2) mit wenigstens einem zweiten vorab definierten Kennwert vergleicht und bei einer Überschreitung und/oder Unterschreitung des zweiten Kennwertes oder bei Verlassen eines vorab definierten zweiten Kennwertbereiches ein Aktivierungsmodul zum Ergreifen von Gegenmaßnahmen, welche die Aufmerksamkeit des Bedieners der Anlage erhöhen, auslöst.

2. Sicherheitseinrichtung nach Anspruch 1, **dadurch gekennzeichnet, dass** das erste und das zweite Modul (11), (12) mit einer Verarbeitungs- und Auswerteeinheit (13) zusammenwirken, die aus den erfassten Werten automatisiert eine weitere Kennzahl (KPI) für den Aufmerksamkeitsgrad des Bedieners ermittelt, diese mit wenigstens einem vorab definierten weiteren Kennwert vergleicht und bei einer Überschreitung und/oder Unterschreitung des weiteren Kennwertes oder bei Verlassen eines vorab definierten weiteren Kennwertbereiches ein weiteres Aktivierungsmodul (15) auslöst.

3. Sicherheitseinrichtung nach Anspruch 1 oder 2, **dadurch gekennzeichnet, dass** als Auslösemechanismus ein Signalgeber vorgesehen ist.

4. Sicherheitseinrichtung nach einem der vorstehenden Ansprüche, **dadurch gekennzeichnet, dass** der Überprüfungs- oder Auslösemechanismus automatisiert ein vorab eingestelltes Signal an den Bediener übermittelt, der Verarbeitungs- und Auswerteeinheit (13) erst nach einer Rückmeldung des Bedieners auf das übermittelte Signal einen Wert zur weiteren Verarbeitung bereitstellt, der nach seiner Verarbeitung das Aktivierungsmodul (15) auslöst.

5. Sicherheitseinrichtung nach einem der vorstehenden Ansprüche, **dadurch gekennzeichnet, dass** mit den vorgegebenen physiologischen Parameter der Aufmerksamkeitsgrad bzw. der Ermüdungsgrad des Bedieners bestimmbar ist.

6. Sicherheitseinrichtung nach einem der vorstehenden Ansprüche, **dadurch gekennzeichnet, dass** das erste Modul (11) dafür vorgesehen ist, Körperreaktionen des Bedieners, beispielsweise mittels wenigstens eines Sensors, zu erfassen.

7. Sicherheitseinrichtung nach einem der vorstehenden Ansprüche, **dadurch gekennzeichnet, dass** die Sicherheitseinrichtung in ein Bedien- und Beobachtungssystem einer sicherheitskritischen technischen Anlage oder eines sicherheitskritischen technischen Prozesses, insbesondere einer Öl- und Gasplattform, einer Raffinerie oder einer Kraftwerksanlage integrierbar ist.

8. Verfahren für eine technische Anlage oder einen technischen Prozesses mit einer Einrichtung zur Erfassung und Auswertung des Aufmerksamkeitsgrades eines Bedieners der Anlage oder des Prozesses, wobei mittels eines ersten Moduls (11) Werte von vorgegebenen physiologischen Parametern des Bedieners erfasst werden und aus den erfassten Werten eine erste Kennzahl (KPI1) ermittelt wird, die ermittelte erste Kennzahl (KPI1) mit einem vorab definierten ersten Kennwert verglichen wird und bei einer Überschreitung und/oder Unterschreitung des ersten Kennwertes oder bei Verlassen eines vorab definierten ersten Kennwertbereiches ein zweites Modul (12) aktiviert wird, mit dem weitere Werte, die von einem Überprüfungs- oder Auslösemechanismus bereitstellt werden, erfasst werden, wobei das mittels dem zweiten Modul (12) aus den erfassten weiteren Werten eine zweite Kennzahl (KPI2) von vorgegebenen physiologischen Parametern für den Aufmerksamkeitsgrad des Bedieners ermittelt wird, diese mit wenigstens einem zweiten vorab definierten Kennwert verglichen wird und bei einer Überschreitung und/oder Unterschreitung des zweiten Kennwertes oder bei Verlassen eines vorab definierten zweiten Kennwertbereiches ein Aktivierungsmodul zum Ergreifen von Gegenmaßnahmen, welche die Aufmerksamkeit des Bedieners der Anlage zu erhöhen, auslöst wird.

9. Verfahren nach Anspruch 8, **dadurch gekennzeichnet, dass** mittels einer mit dem ersten und dem zweiten Modul (11), (12) zusammenwirkenden Verarbeitungs- und Auswerteeinheit (13) aus den erfassten Werten automatisiert eine Kennzahl (KPI) für den Aufmerksamkeitsgrad des Bedieners ermittelt wird, diese mit wenigstens einem vorab definierten Kennwert verglichen wird und bei einer Überschreitung und/oder Unterschreitung des Kennwertes oder bei Verlassen eines vorab definierten Kennwertbereiches ein weiteres Aktivierungsmodul (15) ausgelöst wird.

10. Verfahren nach Anspruch 9, **dadurch gekennzeichnet, dass** die vom ersten und zweiten Modul (11), (12) erfassten Werte von der Verarbeitungs- und Auswerteeinheit (13) aufgezeichnet bzw. gespeichert werden und daraus eine Langzeitkennzahl bestimmt, mit der eine Aussage über die durchschnittliche Anzahl von Ermüdungserscheinungen über einen vorab definierten Zeitraum getroffen wird.

11. Verfahren nach Anspruch 8 bis 10, **dadurch gekennzeichnet, dass** mittels einer im ersten und/oder zweiten Modul (11), (12) abgelegten Bewegungserkennungssoftware ein Signal generiert wird, wenn über einen vorab festgelegten Zeitraum keine Bewegung des Bedieners registriert wurde.

## Claims

1. Safety device for detecting and evaluating the degree of attention of an operator of a technical installation or a technical process, having a first module (11) which records values of predefined physiological parameters of the operator and determines a first characteristic number (KPI1) from the recorded values, compares the determined first characteristic number (KPI1) with a predefined first characteristic value and, if the first characteristic value is exceeded and/or undershot or if a predefined first range of characteristic values is left, activates a second module (12) which records further values provided by a checking or triggering mechanism, wherein
the second module (12) determines a second characteristic number (KPI2) for the degree of attention of the operator from the recorded further values of predefined physiological parameters of the operator, compares the second characteristic number (KPI2) with at least one second predefined characteristic value and, if the second characteristic value is exceeded and/or undershot or if a predefined second range of characteristic values is left, triggers an activation module for taking countermeasures which increase the attention of the operator of the installation.

2. Safety device according to Claim 1, **characterized in that** the first module (11) and the second module (12) interact with a processing and evaluation unit (13) which determines a further characteristic number (KPI) for the degree of attention of the operator in an automated manner from the recorded values, compares this further characteristic number with at least one predefined further characteristic value and triggers a further activation module (15) if the further characteristic value is exceeded and/or undershot or if a predefined further range of characteristic values is left.

3. Safety device according to Claim 1 or 2, **characterized in that** a signal generator is provided as the triggering mechanism.

4. Safety device according to one of the preceding claims, **characterized in that** the checking or triggering mechanism transmits a preset signal to the operator in an automated manner, and provides the processing and evaluation unit (13) with a value for further processing only after feedback from the operator to the transmitted signal, which value triggers the activation module (15) after it has been processed.

5. Safety device according to one of the preceding claims, **characterized in that** the degree of attention or the degree of fatigue of the operator can be determined using the predefined physiological parameters.

6. Safety device according to one of the preceding claims, **characterized in that** the first module (11) is provided for the purpose of detecting body reactions of the operator, for example using at least one sensor.

7. Safety device according to one of the preceding claims, **characterized in that** the safety device can be integrated in an operating and monitoring system of a safety-critical technical installation or a safety-critical technical process, in particular an oil and gas platform, a refinery or a power station installation.

8. Method for a technical installation or a technical process using a device for detecting and evaluating the degree of attention of an operator of the installation or the process, values of predefined physiological parameters of the operator being recorded using a first module (11) and a first characteristic number (KPI1) being determined from the recorded values, the determined first characteristic number (KPI1) being compared with a predefined first characteristic value and, if the first characteristic value is exceeded and/or undershot or if a predefined first range of characteristic values is left, a second module (12) is activated and is used to record further values provided by a checking or triggering mechanism, wherein
a second characteristic number (KPI2) of predefined physiological parameters for the degree of attention of the operator is determined from the recorded further values using the second module (12), this second characteristic number is compared with at least one second predefined characteristic value and, if the second characteristic value is exceeded and/or undershot or if a predefined second range of characteristic values is left, an activation module for taking countermeasures which increase the attention of the operator of the installation is triggered.

9. Method according to Claim 8, **characterized in that** a characteristic number (KPI) for the degree of attention of the operator is determined in an automated manner from the recorded values using a processing and evaluation unit (13) which interacts with the first module (11) and the second module (12), said characteristic number is compared with at least one predefined characteristic value and a further activation module (15) is triggered if the characteristic value is exceeded and/or undershot or if a predefined range of characteristic values is left.

10. Method according to Claim 9, **characterized in that** the values recorded by the first module (11) and the second module (12) are recorded or stored by the processing and evaluation unit (13) and are used to determine a long-term characteristic number which is used to make a statement on the average number of signs of fatigue over a predefined period of time.

11. Method according to Claims 8 to 10, **characterized in that** a signal is generated using motion detection software stored in the first module (11) and/or in the second module (12) if no movement of the operator has been registered over a predefined period of time.

## Revendications

1. Dispositif de sécurité pour la détection et l'évaluation du degré d'attention d'un opérateur d'une installation technique ou d'un processus technique avec un premier module (11) qui détecte des valeurs de paramètres physiologiques prescrits de l'opérateur et détermine un premier indicateur (KPI1) à partir des valeurs détectées, compare le premier indicateur (KPI1) déterminé avec une première valeur caractéristique définie à l'avance et, en cas d'un dépassement par le haut et/ou d'un dépassement par le bas de la première valeur caractéristique ou en cas de sortie d'une première plage de valeurs caractéristiques définie à l'avance, active un deuxième module (12) qui détecte d'autres valeurs mises à disposition par un mécanisme de vérification ou de déclenchement, dans lequel le deuxième module (12) détermine, à partir des autres valeurs détectées de paramètres physiologiques prescrits de l'opérateur, un deuxième indicateur (KPI2) pour le degré d'attention de l'opérateur, compare le deuxième indicateur (KPI2) avec au moins une deuxième valeur caractéristique définie à l'avance et, en cas d'un dépassement par le haut et/ou d'un dépassement par le bas de la deuxième valeur caractéristique ou en cas de sortie d'une deuxième plage de valeurs caractéristiques définie à l'avance, déclenche un module d'activation pour prendre des mesures correctives qui augmentent l'attention de l'opérateur de l'installation.

2. Module de sécurité selon la revendication 1, **caractérisé en ce que** les premier et deuxième modules (11), (12) coopèrent avec une unité de traitement et d'évaluation (13) qui détermine de manière automatisée, à partir des valeurs détectées, un autre indicateur (KPI) pour le degré d'attention de l'opérateur, compare celui-ci avec au moins une autre valeur caractéristique définie à l'avance et, en cas d'un dépassement par le haut et/ou d'un dépassement par le bas de l'autre valeur caractéristique ou en cas de sortie d'une autre plage de valeurs caractéristiques définie à l'avance, déclenche un autre module d'activation (15).

3. Dispositif de sécurité selon la revendication 1 ou 2, **caractérisé en ce que** l'on prévoit un poste transmetteur de signaux en tant que mécanisme de déclenchement.

4. Dispositif de sécurité selon l'une des revendications précédentes, **caractérisé en ce que** le mécanisme de vérification ou de déclenchement transmet de manière automatisée un signal réglé à l'avance à l'attention de l'opérateur, et met seulement à disposition de l'unité de traitement et d'évaluation (13) une valeur pour le traitement ultérieur après un accusé de réception de l'opérateur suite au signal transmis, laquelle valeur, après son traitement, déclenche le module d'activation (15).

5. Dispositif de sécurité selon l'une des revendications précédentes, **caractérisé en ce que**, grâce aux paramètres physiologiques prescrits, on peut déterminer le degré d'attention ou le degré de fatigue de l'opérateur.

6. Dispositif de sécurité selon l'une des revendications précédentes, **caractérisé en ce que** le premier module (11) est prévu pour détecter des réactions corporelles de l'opérateur, par exemple au moyen d'au moins un capteur.

7. Dispositif de sécurité selon l'une des revendications précédentes, **caractérisé en ce que** le dispositif de sécurité peut être intégré dans un système de commande et d'observation d'une installation technique critique pour la sécurité ou d'un processus technique critique pour la sécurité, en particulier une plate-forme pétrolière ou gazière, une raffinerie ou une centrale électrique.

8. Procédé pour une installation technique ou un processus technique avec un dispositif pour la détection et l'évaluation du degré d'attention d'un opérateur de l'installation ou du processus, dans lequel on détecte, au moyen d'un premier module (11), des valeurs de paramètres physiologiques prescrits de l'opérateur et détermine, à partir des valeurs détectées, un premier indicateur (KPI1), le premier indicateur (KPI1) déterminé étant comparé avec une première valeur caractéristique définie à l'avance et, en cas de dépassement par le haut et/ou dépassement par le bas de la première valeur caractéristique ou en cas d'une sortie d'une première plage de valeurs caractéristiques définie à l'avance, un deuxième module étant activé (12) avec lequel d'autres valeurs sont détectées, lesquelles sont mises à disposition par un mécanisme de vérification ou de déclenchement, dans lequel on détermine, au moyen du deuxième module (12), à partir des autres valeurs détectées, un deuxième indicateur (KPI2) de paramètres physiologiques prescrits pour le degré d'attention de l'observateur, celui-ci étant comparé avec au moins une deuxième valeur caractéristique définie à l'avance et, en cas d'un dépassement par le haut et/ou d'un dépassement par le bas de la deuxième valeur caractéristique ou en cas de sortie d'une deuxième plage de valeurs caractéristiques définie à l'avance, un module d'activation étant déclenché pour la prise de mesures correctives qui augmentent l'attention de l'opérateur de l'installation.

9. Procédé selon la revendication 8, **caractérisé en ce qu'**au moyen d'une unité de traitement et d'évaluation (13) coopérant avec les premier et deuxième modules (11), (12), on détermine de manière automatisée, à partir des valeurs détectées, un indicateur (KPI) pour le degré d'attention de l'opérateur, celui-ci étant comparé avec au moins une valeur caractéristique définie à l'avance et, en cas d'un dépassement par le haut et/ou d'un dépassement par le bas de la valeur caractéristique ou en cas de sortie d'une plage de valeurs caractéristiques définie à l'avance, un autre module d'activation (15) étant déclenché.

10. Procédé selon la revendication 9, **caractérisé en ce que** les valeurs détectées par les premier et deuxième modules (11), (12) sont enregistrées ou mises en mémoire par l'unité de traitement et d'évaluation (13) et **en ce que** l'on détermine un indicateur de long terme à partir de celles-ci, avec lequel on obtient une information sur le nombre moyen d'apparitions de signes de fatigue sur un laps de temps défini à l'avance.

11. Procédé selon les revendications 8 à 10, **caractérisé en ce que**, grâce à un logiciel de reconnaissance de mouvements mis en place dans le premier et/ou deuxième module (11), (12), un signal est généré si aucun mouvement de l'opérateur n'a été enregistré pendant un laps de temps défini à l'avance.
